# EUROPEAN PATENT SPECIFICATION

(11) **EP 3 543 153 B1**
(45) Date of publication and mention of the grant of the patent: **07.04.2021**
(21) Application number: 19163839.4
(22) Date of filing: 19.03.2019
(51) Int. Cl.: B65B 31/02, B65B 51/14, B65B 59/04, B29C 65/02

(54) **MACHINE FOR PACKAGING FOOD PRODUCTS IN VACUUM BAGS**
MASCHINE ZUR VERPACKUNG VON LEBENSMITTELPRODUKTEN IN VAKUUMBEUTELN
MACHINE A EMBALLER SOUS VIDE DES PRODUITS ALIMENTAIRES DANS DES SACS

(30) Priority: 21.03.2018 IT 201800003801
(43) Date of publication of application: 25.09.2019
(73) Proprietor: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(56) References cited:
- WO-A1-02/10017
- US-A1- 2014 202 115
- US-A1- 2017 144 788

## Description

The present invention relates to a machine for packaging food products in vacuum bags.

As is known, vacuum packaging machines are commercially available which have a base structure in which there is a vacuum chamber, which can be closed by means of a lid and in which a suitable container is placed which is constituted generally by a sealable bag, formed by sheets of plastic material, in which food products to be vacuum packaged are inserted.

In particular, once the bag has been placed in the vacuum chamber with the food products to be vacuum packaged inside it, and once the vacuum chamber has been closed by means of its lid, vacuum is created in the vacuum chamber by means of the activation of a vacuum pump.

Inside the vacuum chamber there are means for heat-sealing the bag, constituted typically by a heat-sealing bar, usually supported by the base structure of the machine, and by a contrast bar, in turn supported by the lid, between which it is possible to interpose a portion of the bag.

In particular, the heat-sealing bag is provided with an electric resistance heater and can move in the direction of the contrast bar, so as to be able to press the bag against the contrast bar, and allows to be able to seal it subsequently, by heat-sealing its sheets made of plastic material, as a consequence of the electric power supply of its electric resistance heater An exemplary prior art vacuum packaging machine is disclosed in document WO02/10017.

As is also known, in traditional vacuum packaging machines the lid of the vacuum chamber can be made of transparent plastic material, such as for example polymethyl methacrylate (PMMA), or of metallic material, such as stainless steel or aluminum.

In this last case, the lid is sometimes provided with windows for monitoring the packaging cycle.

In all known cases, the contrast bars are mounted on the lids in a nonremovable manner by means of screws and adhesive elements or by means of their integration in the body of the lid.

Known solutions do not allow effective cleaning and sanitizing of the lid, which is often subject to being soiled by the projection and deposition thereon of liquids and vapors which are often oily, generated by vacuum packaging, at temperatures equal to or higher than the ambient temperature, of liquid food products or food products containing substantial liquid parts, which in vacuum conditions have a boiling point close to 20°C.

The aim of the present invention is to provide a machine for packaging food products in vacuum bags that is capable of improving the background art in one or more of the aspects indicated above.

Within this aim, an object of the invention is to provide a machine for packaging food products in vacuum bags that is capable of meeting in a simple and practical manner the cleaning and maintenance requirements of the machine.

Another object of the invention is to provide a vacuum packaging machine that is convenient and easy to use.

A further object of the invention is to provide a machine for packaging food products in vacuum bags that is capable of giving the greatest assurances of reliability and safety in use.

A further object of the present invention is to overcome the drawbacks of the background art in a manner that is alternative to any existing solutions.

Another object of the invention is to provide a machine for packaging food products in vacuum bags that is constructively simple to provide and can be obtained at highly competitive costs.

This aim, as well as these and other objects which will become better apparent hereinafter, are achieved by a machine for packaging food products in vacuum bags according to claim 1, optionally provided with one or more of the characteristics of the dependent claims.

Further characteristics and advantages of the invention will become better apparent from the description of some preferred but not exclusive embodiments of the machine according to the invention, illustrated by way of nonlimiting example in the accompanying drawings, wherein:
Figure 1 is a perspective view of a machine according to the invention with a lid in the open position;
Figure 2 is a top plan view of the machine according to the invention with the lid in the open position;
Figure 3 is a partial perspective view of the lid of the machine according to the invention in the open condition in order to show a contrast bar associated therewith;
Figure 4 is a perspective view of the contrast bar disengaged from the lid;
Figure 5 is a partial exploded perspective view of the contrast bar;
Figure 6 is an exploded perspective view of a quick coupling/uncoupling device of the contrast bar;
Figures 7 and 8 are schematic top plan views of some components of the quick coupling/uncoupling device in two different operating situations;
Figure 9 is a longitudinal sectional view, taken along the contrast bar, of the quick coupling/uncoupling device;
Figure 10 is a longitudinal sectional view of the quick coupling/uncoupling device, highlighting a spacer inserted between the lid and the contrast bar;
Figure 11 is a perspective view of the machine according to the invention in a possible constructive variation;
Figure 12 is an exploded perspective view of the quick coupling/uncoupling device according to the constructive variation of Figure 11;
Figure 13 is a perspective view of a further embodiment of the invention;
Figure 14 is an enlarged-scale perspective view of the embodiment of Figure 13;
Figure 15 is a top view of a detail of the embodiment of Figure 13;
Figure 16 is a sectional view, taken along the plane XVI-XVI of Figure 15;
Figure 17 is a perspective view of a variation of the embodiment of Figure 13;
Figure 18 is an enlarged-scale perspective view of a detail of the variation of Figure 17.

With reference to the figures, the machine for packaging food products in vacuum bags according to the invention, designated generally by the reference numeral 1, comprises a base structure 2 in which there is a vacuum chamber 3 which is designed to accommodate a bag for the vacuum packaging of food products and can be closed by means of a lid 4, conveniently hinged to the base structure 2.

The machine is further provided with means for sealing the bag, which comprise a heat-sealing bar 5, associated with the base structure 2, and a contrast bar 6, associated with the lid 4, between which it is possible to interpose a portion of the bag, in particular its portion proximate to its access mouth, so as to be able to seal it by heat-sealing.

The contrast bar 6 is associated with the lid 4 detachably by means of at least one quick coupling/uncoupling device 7.

More preferably, there is a pair of quick coupling/uncoupling devices 7 arranged at the ends of the contrast bar 6.

It should be noted that, as is common, the contrast bar 6 can be provided by means of a profiled element 6a, made of metallic material, such as for example aluminum, and having a transverse cross-section that is contoured to accommodate a contrast body 6b, made of elastically flexible material, such as rubber or the like, and designed to make contact with the portion of the bag to be sealed.

Each one of the quick coupling/uncoupling devices 7 comprises male mating means 8, which can engage female mating means 9, and retention means 10, which allowed to keep the male mating means 8 engaged with the female mating means 9.

Each quick coupling/uncoupling device 7 is furthermore provided with actuation means 11 which can be activated by the user to deactivate the retention means 10 and thus allow the disengagement of the male mating means 8 from the female mating means 9.

Conveniently, the female mating means 9 comprise a seat 9a which is formed in a coupling body 12 arranged on the contrast bar 6.

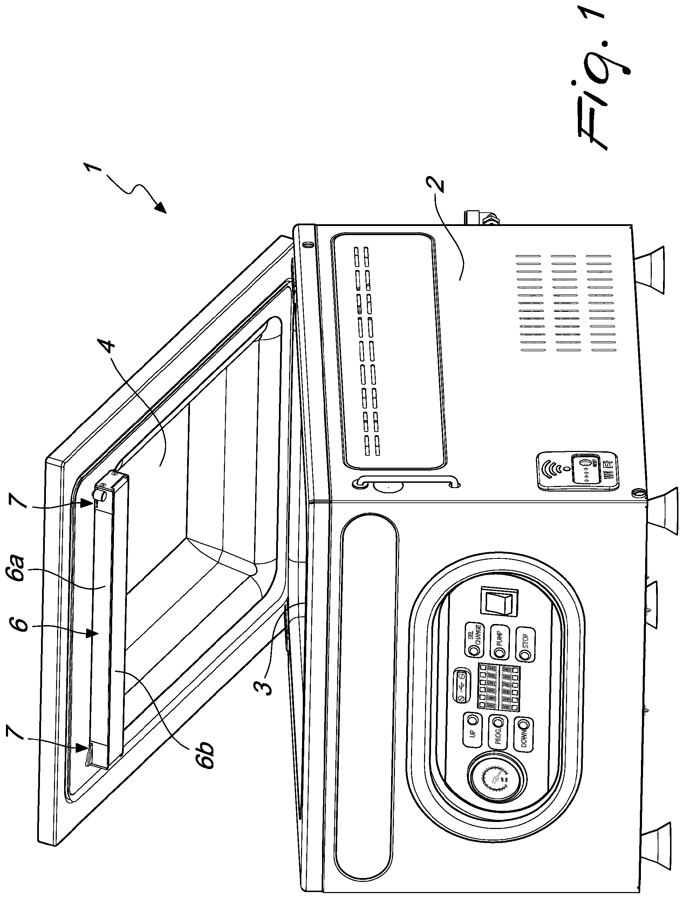

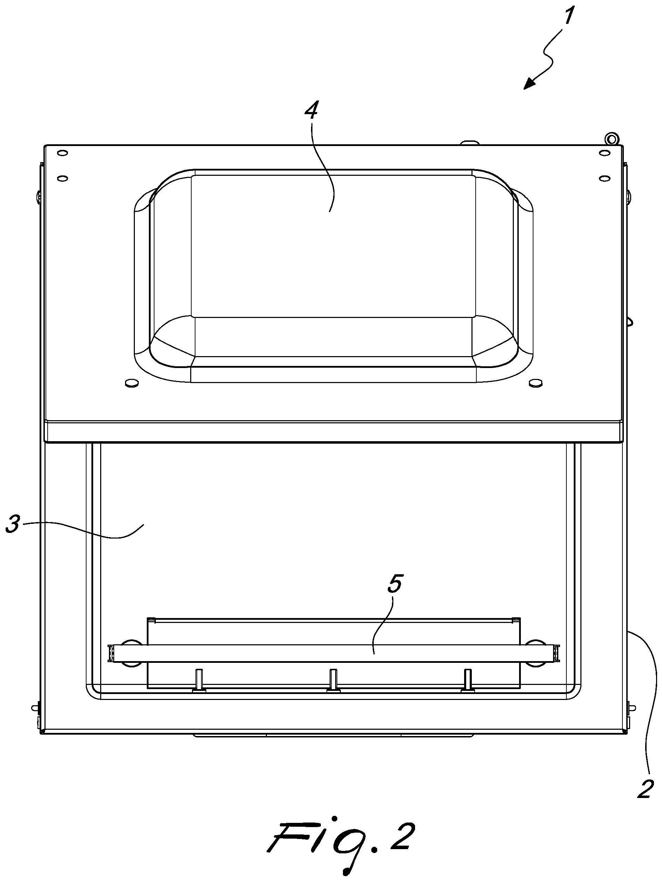

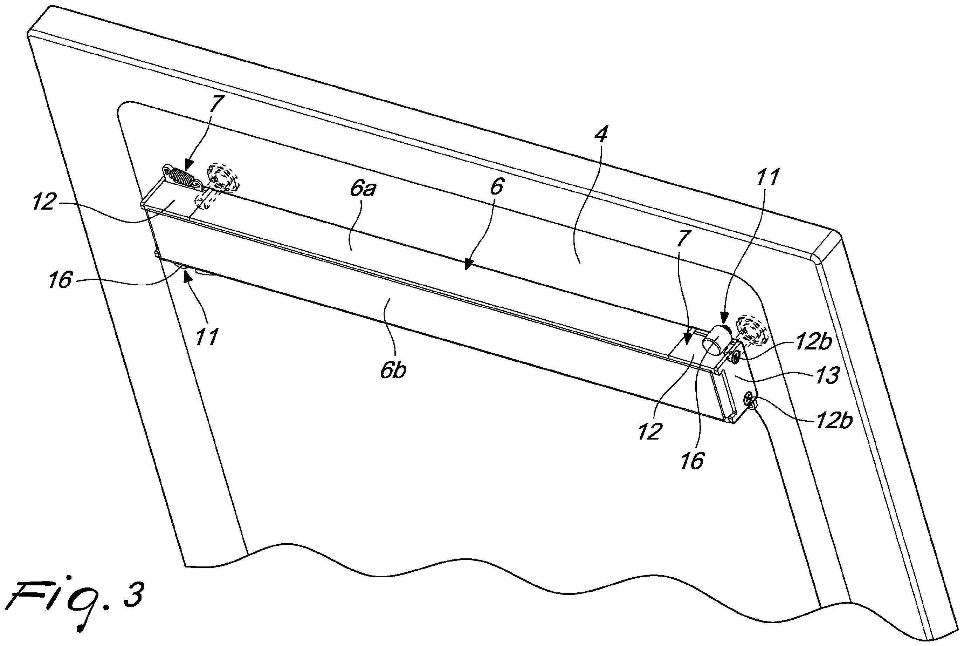

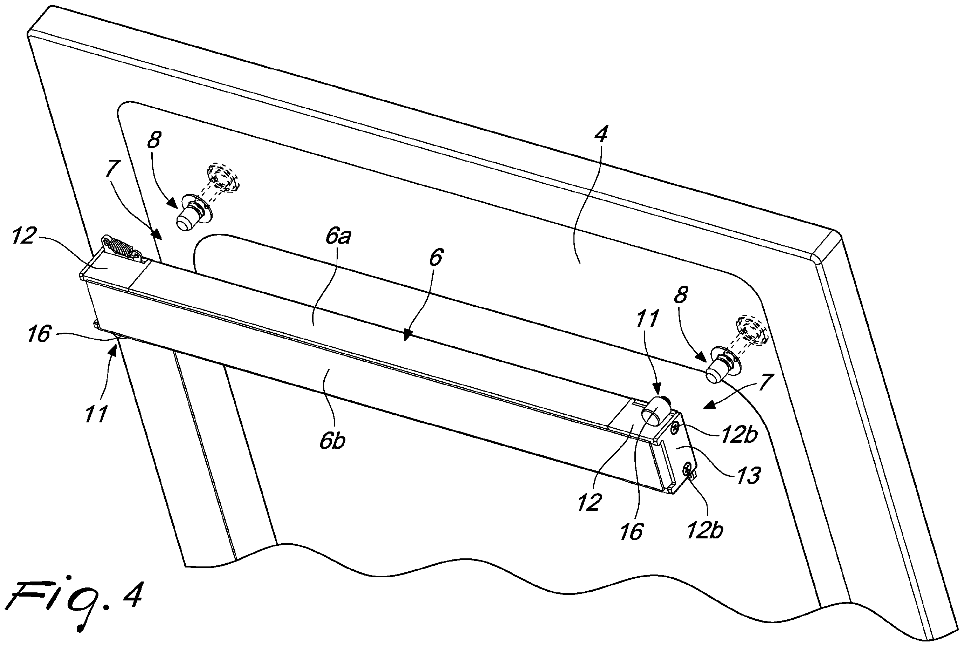

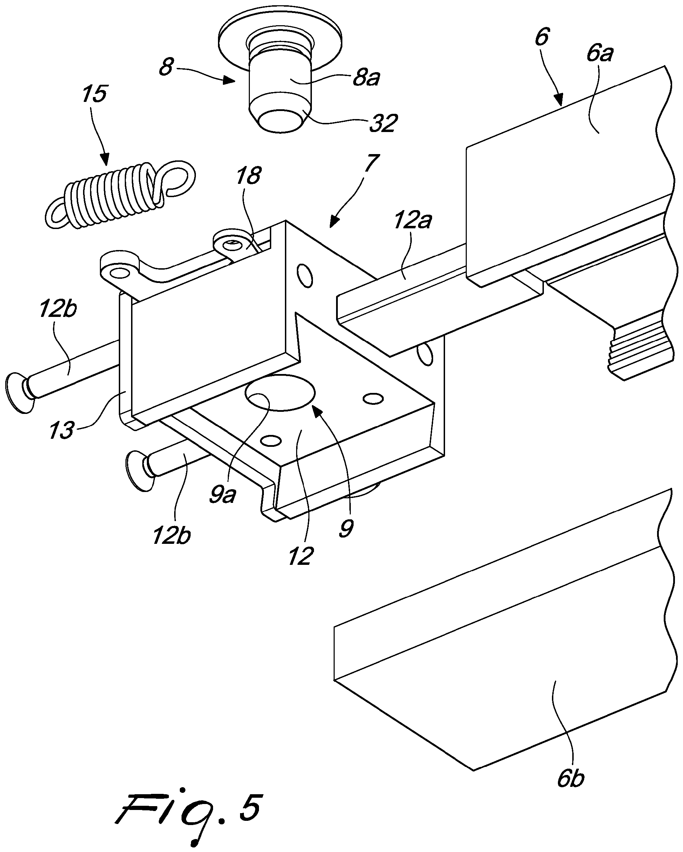

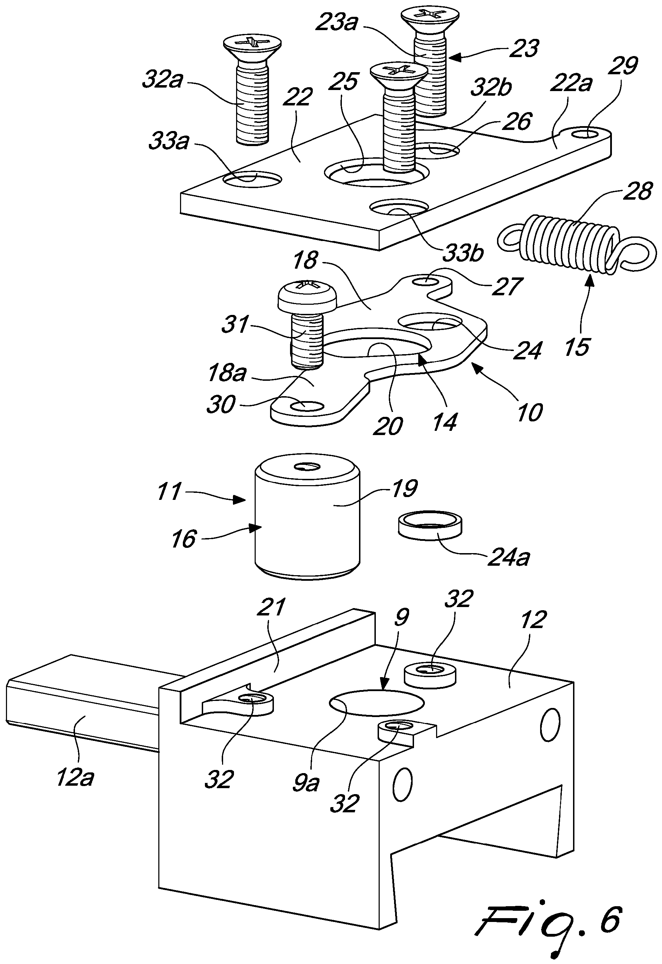

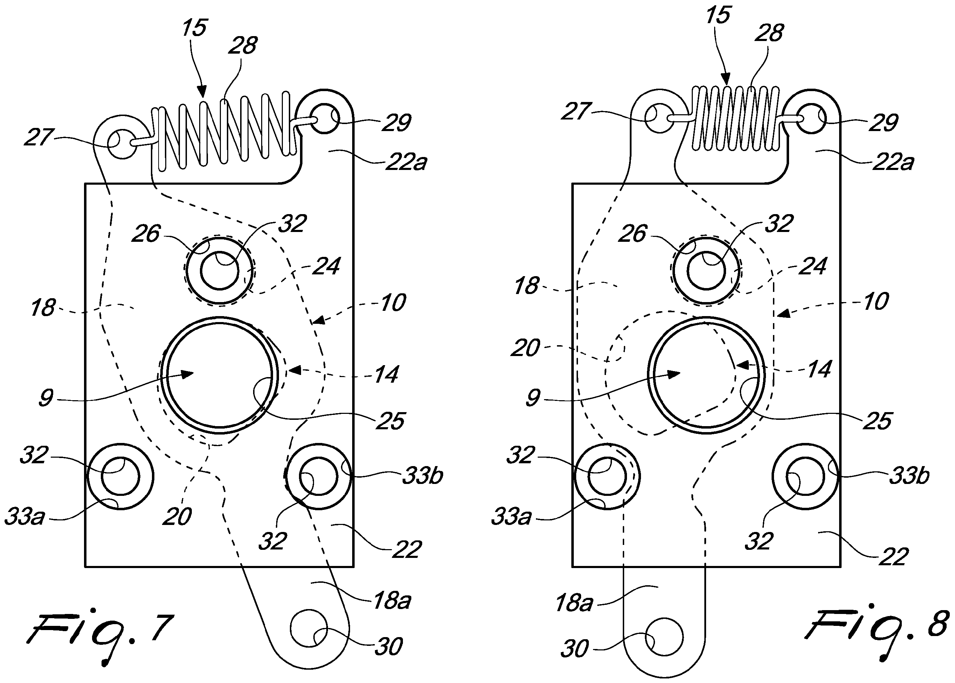

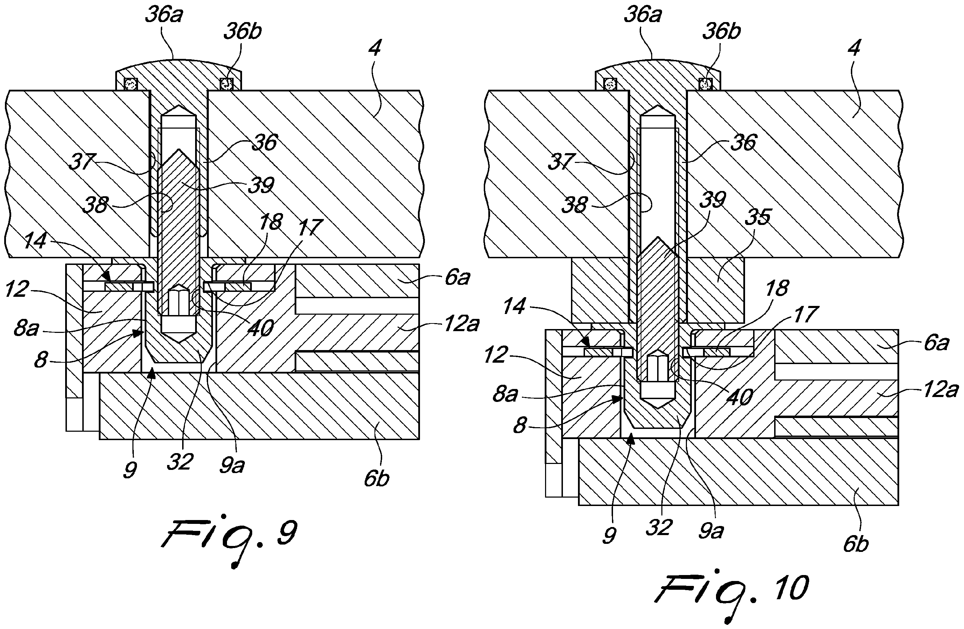

It should be noted that the coupling body 12 may be provided as a separate part with respect to the contrast bar 6, as in the example of Figures 1 to 10, and in this case it is conveniently made of metallic material, such as for example aluminum or aluminum and zinc alloys, or of thermoplastic material with high mechanical strength and is advantageously coupled to the profiled element 6a for example by means of the axial insertion of a mating portion 12a thereof within the profiled element 6a, and rigidly anchored thereto by virtue of fixing means which are constituted for example by screws 12b or the like, which pass through the coupling body 12 to be screwed at the end to the contrast bar 6, at respective engagement portions formed on the profiled element 6a, and allow to optionally fix also a terminal closure plate 13 of the profiled element 6a.

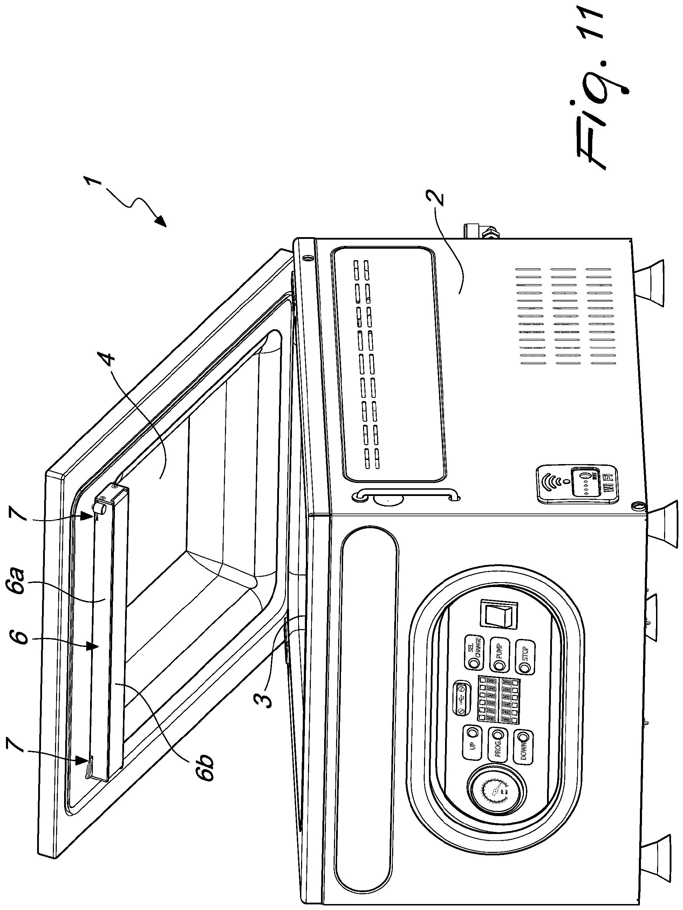

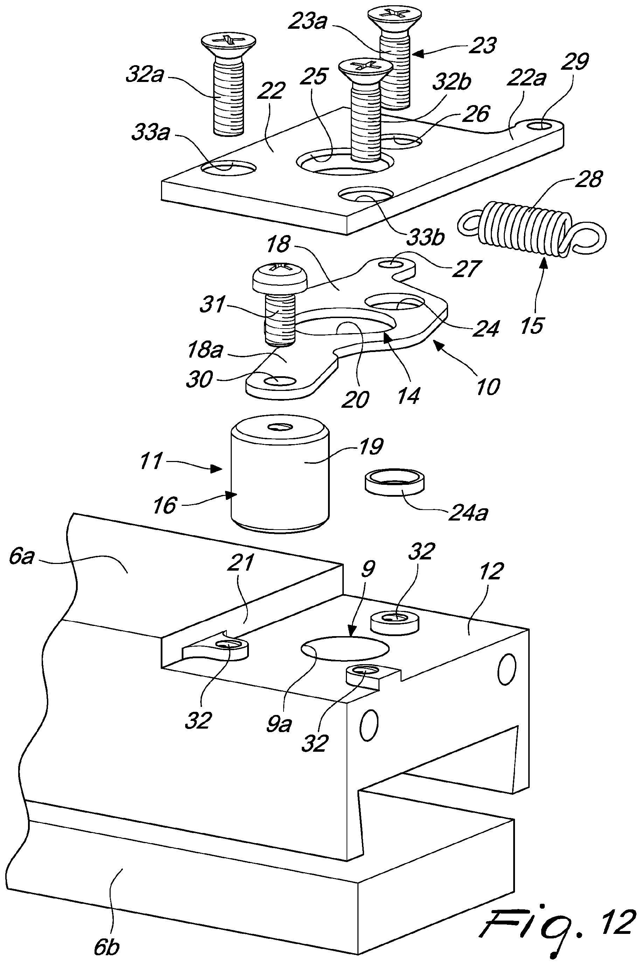

As an alternative, the coupling body 12 can also be provided monolithically with respect to the contrast bar 6, as in the constructive variation shown in Figures 11 and 12.

In turn, the male mating means 8 comprise an engagement pin 8a, which is connected to the lid 4 and can be engaged detachably with the seat 9a.

Conveniently, the retention means 10 comprise, at the seat 9a, a retention element 14, which is pushed by elastic means 15 in order to retain the engagement pin 8a in the seat 9a and can move in contrast with the elastic means 15 in order to allow the insertion of the engagement pin 8a in the seat 9a.

Advantageously, the actuation means 11 comprise a button 16, which can be actuated by the user to actuate the movement of the retention element 14 in disengagement from the engagement pin 8a, so as to allow the disengagement of the engagement pin 8a from the seat 9a.

Advantageously, the engagement pin 8a has, on its lateral surface, a groove 17, for example having an annular extension, which can be engaged by the retention element 14 in order to prevent the disengagement of the engagement pin 8a from the seat 9a.

Delving further into the details of the illustrated embodiments, the retention element 14 is conveniently constituted by a lever body 18, which can rotate with respect to the contrast bar 6 and more particularly with respect to the coupling body 12.

Advantageously, the button 16 comprises an actuation end 18a of the lever body 18, to which a maneuvering pin 19, which is conveniently knurled, is fixed.

Conveniently, the lever body 18 has a through opening 20 and can be moved between a locking position, in which it affects, with at least one portion thereof, the seat 9a, and a release position, in which the through opening 20 is substantially aligned with the seat 9a.

With particular reference to the embodiments shown in the figures, the lever body 18 is provided by a plate-like element accommodated in a hollow 21, which is formed on the face of the coupling body 12 that is crossed by the seat 9a and is closed, on its side that is opposite with respect to the coupling body 12, by a closure plate 22, which faces the lever body 18 and is fixed to the coupling body 12.

In this case, the through opening 20 which passes through the plate-like element that constitutes the lever body 18 conveniently has the shape of a semicircle or of a portion of a circle and is arranged substantially at the center of the lever body 18.

Also in this embodiment, the lever body 18 is in turn articulated to the coupling body 12 by means of an articulation pivot 23, which is advantageously constituted by a screw 23a, which passes through an engagement hole 24, formed in the lever body 18, proximate to the through opening 20, so as to provide a fulcrum around which the lever body 18 is free to rotate, for example through an angle of approximately 20°. Conveniently, a guiding bush 24a for the articulation pivot 23 is accommodated within the engagement hole 24.

Substantially at the through opening 20 and at the engagement hole 24 of the lever body 18 there are, respectively, in the closure plate 22, a passage opening 25, which can be crossed by the engagement pin 8a, and a through hole 26, which accommodates the screw 23a which provides the articulation pivot 23. Conveniently, the passage opening 25 of the closure plate 22 is aligned with the seat 9a formed in the coupling body 12.

At one end of the lever body 18 there is conveniently an anchoring hole 27 for a spiral spring 28, which provides the elastic means 15 and is provided with hooks at its ends for its connection to the anchoring hole 27 and to a coupling hole 29, which is conveniently formed in a tab 22a which protrudes from the edge of the closure plate 22.

At the opposite end of the lever body 18, which in practice constitutes its actuation end 18a, there is a fixing hole 30, in which a connecting screw 31 is accommodated which screws into the maneuvering pin 19 so as to fix the latter to the lever body 18.

Conveniently, in order to fix the closure plate 22 to the coupling body 12 there are for example in the coupling body 12 three threaded holes 32, in which respectively the screw 23a and two other fixing screws 32a and 32b are screwed, the screw 23a providing the articulation pivot 23 of the lever body 18 and the fixing screws 32a and 32b passing through respective engagement holes 33a and 33b formed in the closure plate 22, allowing to retain the closure plate 22, so as to keep the lever body 18 accommodated in the hollow 21 of the coupling body 12.

Advantageously, the passage opening 25 of the closure plate 22 and the seat 9a of the coupling body 12 are smaller than the through opening 20 that is present in the lever body 18.

With the described structure, when the spiral spring 28 is in the inactive condition, the lever body 18 is in the locking position, in which it partially blocks the passage opening 25 of the closure plate 22 and the seat 9a of the coupling body 12, and is able to engage, with a portion of the edge of its through opening 20, in the groove 17 that is present on the engagement pin 8a, when the latter is inserted in the seat 9a, so as to lock the engagement pin 8a in the seat 9a.

When instead the spiral spring 28 is pulled by the user, by acting on the maneuvering pin 19 that is integral with the lever body 18, the lateral movement of the through opening 20 provided on the lever body 18 is achieved, so as to disengage the lever body 18 from the groove 17 of the engagement pin 8a and open the passage that is necessary to extract the engagement pin 8a from the seat 9a and from the passage opening 25 of the closure plate 22. Once the user has released the maneuvering pin 19, the spiral spring 28 can return to its initial inactive condition, producing the return of the lever body 18 to the locking position.

Optionally, the buttons 16 and the quick coupling/uncoupling devices 7 and therefore the corresponding maneuvering pins 19 can be arranged on mutually opposite sides with respect to the longitudinal axis of the contrast bar 6, as in the illustrated examples.

It should be noted that the engagement pin 8a has, at its free end, a guiding head 32, with side walls that are inclined with respect to the axis of the engagement pin 8a, so as to allow, following the sliding engagement of the guiding head on the lever body 18, upon the insertion of the engagement pin 8a in the seat 9a, the automatic transition of the lever body 18 from the locking position to the release position in contrast with the action of the elastic means 15.

For the sake of completeness, it should be noted that each engagement pin 8a can be connected to the lid 4 by virtue of the interposition of adjustment means, which allow to adjust its axial position, and consequently the position of the contrast bar 6, as a function of the depth of the vacuum chamber 3 and of the distance of the heat-sealing bar 5 from the bottom of the vacuum chamber 3.

These adjustment means can for example comprise spacers 35 arranged between the engagement pins 8a and the lid 4.

It should be noted that each one of the engagement pins 8a can be conveniently connected to the lid 4 by means of a sealing screw 36, which passes through an accommodation hole 37 formed in the lid 4 and engages the external face of the lid 4 with its head 36a, advantageously provided with an O-ring gasket 36b.

The sealing screw 36 is provided axially with a threaded engagement seat 38 for a captive screw 39, on which it is possible to screw a female thread 40, formed axially in the corresponding engagement pin 8a. By varying the axial position of the captive screw 39 it is possible to vary the axial position of the engagement pin 8a and consequently arrange a suitable spacer 35 between the engagement pin 8a and the internal face of the lid 4.

The operation of the machine according to the invention is as follows.

With the lid 4 in the open position, it is possible to uncouple the contrast bar 6 from the lid 4, by acting first on the buttons 16 of the quick coupling/uncoupling devices 7, in contrast with the elastic means 15, so as to move the retention elements 14 into disengagement from the engagement pins 8a and subsequently moving the contrast bar 6 away from the lid 4, so as to disengage the engagement pins 8a from the seats 9a of the coupling bodies 12.

In order to instead proceed with the mating of the contrast bar 6 with the lid 4 it is sufficient to push the contrast bar 6 toward the lid 4, inserting the engagement pins 8a in the seats 9a, so that the retention element 14 can engage the groove 17 of the engagement pins 8a.

In practice it has been found that the invention achieves the intended aim and objects, providing a machine for packaging food products in vacuum which is provided with a contrast bar that can be easily and quickly removed from the lid of the machine itself, so as to allow valid cleaning and maintenance.

The invention thus conceived is susceptible of numerous modifications and variations, all of which are within the scope of the appended claims; all the details may furthermore be replaced with other technically equivalent elements.

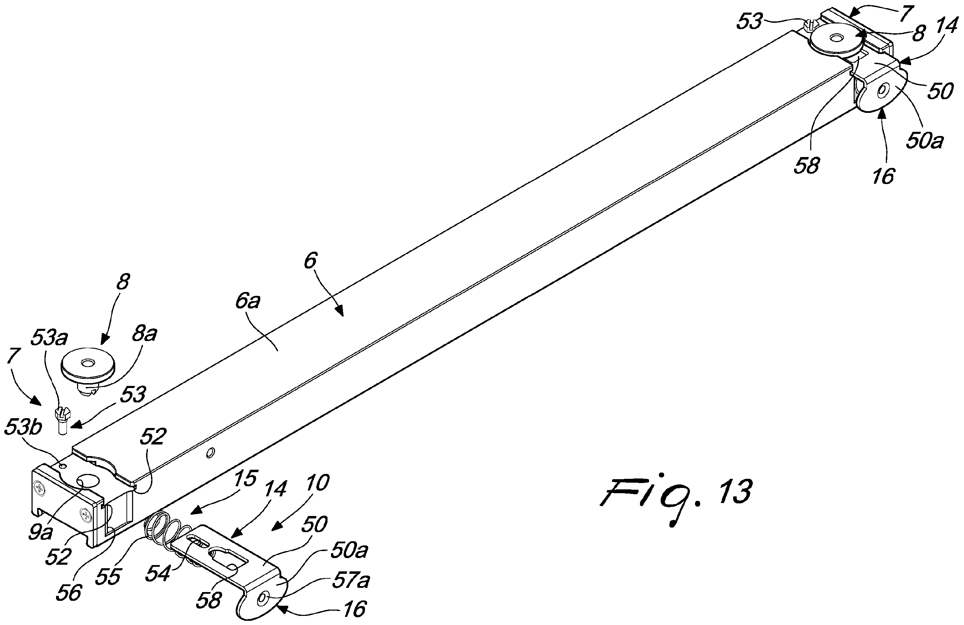

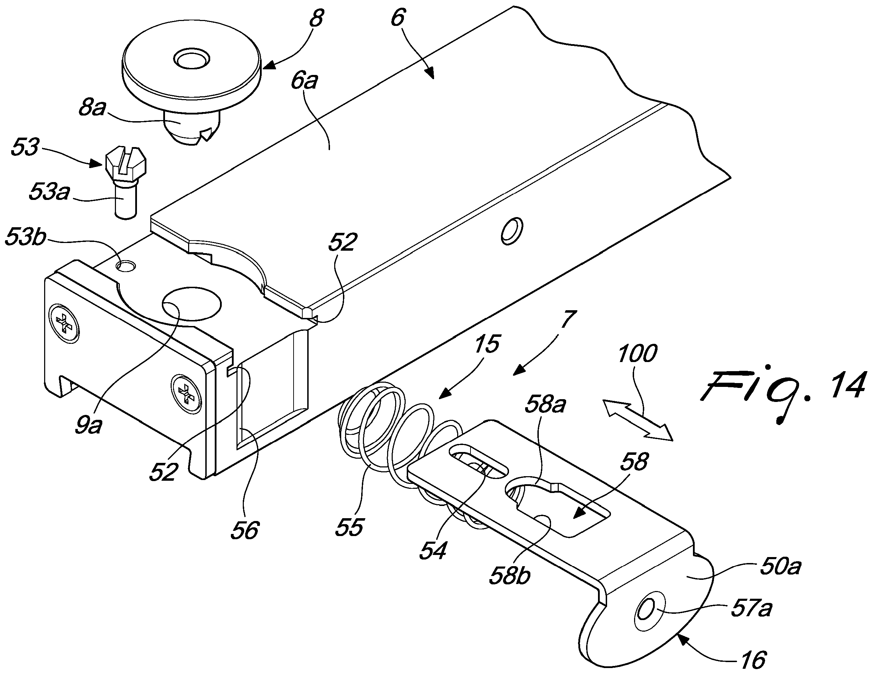

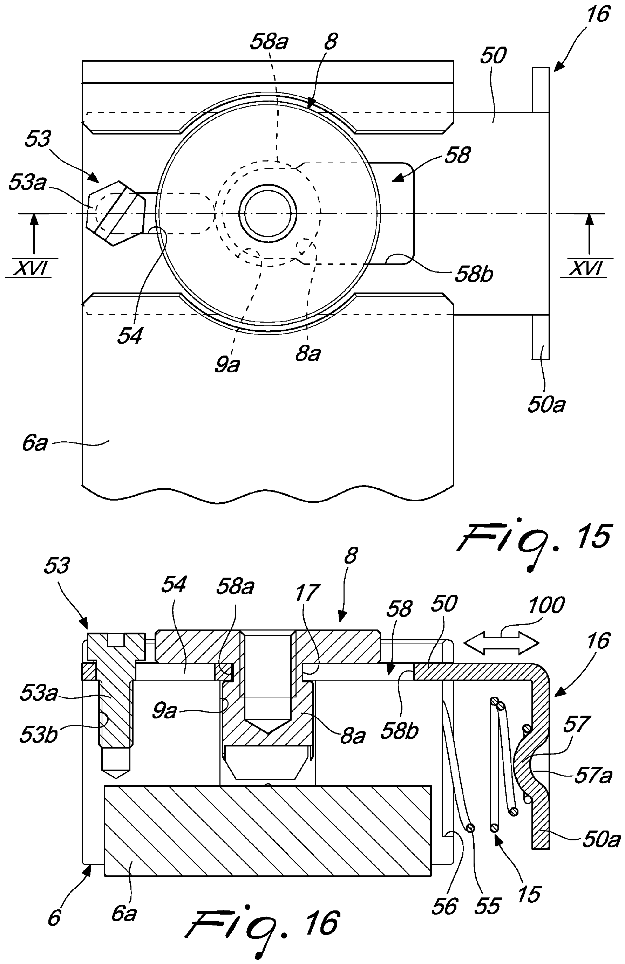

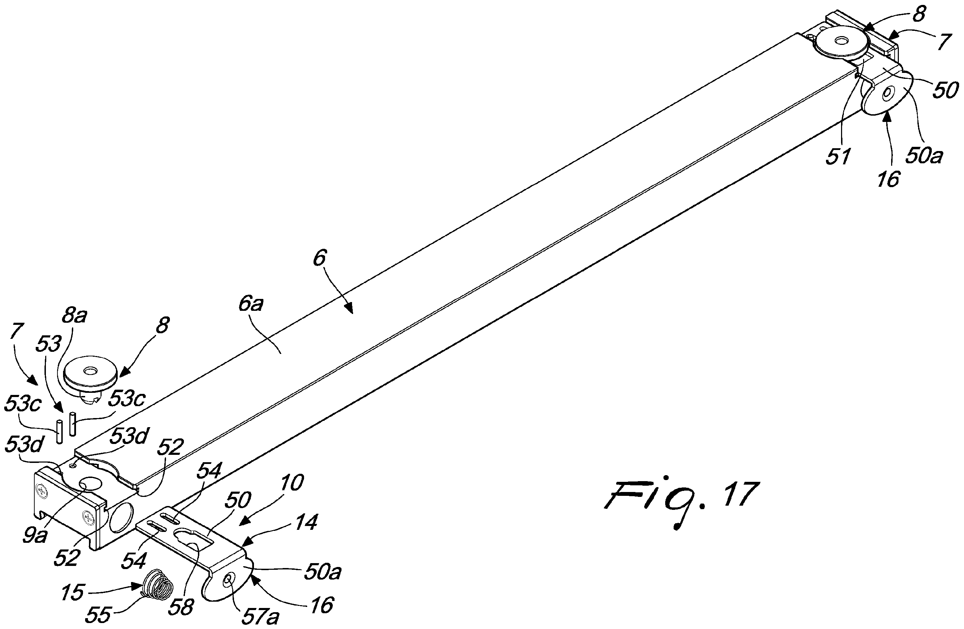

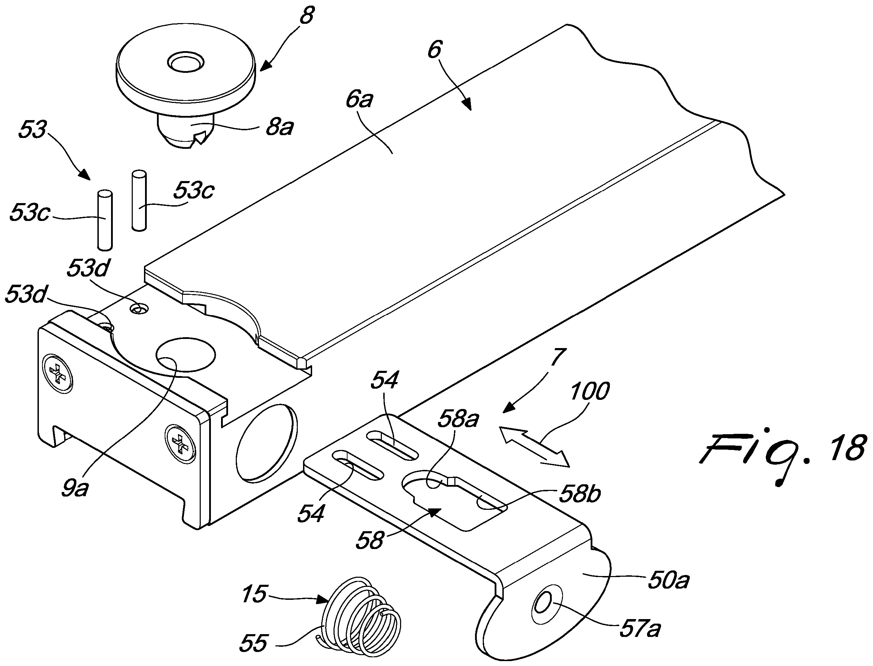

Thus, for example, as shown in Figures 13-18, the retention element 14 can be provided, as an alternative, by means of a plate-like body 50 which is fitted so that it can translate, with respect to said contrast bar 6, along a movement direction 100, which is substantially perpendicular to the axis of the engagement pin 8a. In particular, the plate-like body 50 lies conveniently on a plane that is substantially perpendicular to the axis of the seat 9a and engages slidingly, with its own mutually opposite longitudinal edges, a pair of guiding seats 52, which are extended along said movement direction 100 and are formed in the profiled element 6a of the contrast bar 6. Advantageously, the extraction of the plate-like body 50 from the guiding seats 52 is prevented by at least one abutment element 53, which also allows to delimit the stroke of the plate-like body 50 along the movement direction 100. The abutment element 53 is fixed to the contrast bar 6 and engages a respective elongated opening 54, which is formed in the plate-like body and is extended substantially parallel to the guiding seats 52. The or each abutment element 53 can be optionally provided, as in the embodiment of Figures 12-16, by a screw 53a, which is screwed into a complementarily threaded hole 53b provided in the profiled element 6a of the contrast body 6 or, as in the variation of Figures 17 and 18, by pins 53c, which are engaged by interference in respective interlocking holes 53d, which are again formed in the profiled element 6a of the contrast body 6.

Conveniently, the plate-like body 50 has a folded end 50a which in practice forms the button 16 for the actuation in motion of the plate-like body 50. In this case, the elastic means 15 are conveniently provided by a return spring 55, which is advantageously retained in a position that is interposed between the contrast bar 6 and the folded end 50a of the plate-like body 50 by an abutment seat 56, which is formed in the contrast bar 6, and an engagement protrusion 57, which is provided on the folded end 50a of the plate-like body 50 by means of an indentation 57a.

Furthermore, in the plate-like body 50 there is a through slot 58 which is extended substantially parallel to the movement direction 100 of the plate-like body 50. In particular, the through slot 58 has at least two communicating portions, respectively an engagement portion 58a and an insertion portion 58b, which are arranged in succession along the longitudinal extension of the through slot 58. More particularly, the insertion portion 58b has, transversely to the longitudinal extension of the through slot 58, a larger space occupation than the engagement portion 58a.

In greater detail, the engagement pin 8a is capable of passing through the insertion portion 58b but not through the engagement portion 58a of the through slot 51.

By means of a translation of the plate-like body 50 along its movement direction 100, it is possible to arrange selectively at the seat 9a the engagement portion 58a or the insertion portion 58b of the through slot 58.

In particular, with the engagement portion 58a at the seat 9a, the plate-like body 50 is in a locking position, in which it is capable of preventing the disengagement of the engagement pin 8a from the seat 9a, while when the insertion portion 58b is located at the seat 9a the plate-like body 50 is in a release position, in which it allows the insertion and exit of the engagement pin 8a with respect to the seat 9a.

The return spring 55 acts in the sense of keeping the plate-like body 50 in the locking position, so that the transition of the plate-like body 50 from the locking position to the release position can occur as a consequence of the application, on the part of the user, on the folded end 50a of the plate-like body 50, of a thrust that is capable of overcoming the force applied by the return spring 55.

With such a structure, the engagement pin 8a can be engaged with the engagement portion 58a of the through slot 51, following the crossing, on the part of the engagement pin 8a, of the insertion portion 58b, which is arranged beforehand by the user at the seat 9a, by virtue of a movement of the plate-like body 50 in the release position, and following the insertion of the engagement pin 8a in the seat 9a, with subsequent translation of the plate-like body 50, along its movement direction, from the release position to the locking position, due to the elastic return of the return spring 54, so to achieve the placement of the engagement portion 58a at the seat 9a and in engagement with the portion of the engagement pin 8a that is affected by the groove 17.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for packaging food products in vacuum bags, comprising a base structure (2) with a vacuum chamber (3) formed therein which can be closed by means of a lid (4) and is designed to accommodate a bag for the vacuum packaging of food products, means being provided for sealing said bag which comprise a heat-sealing bar (5), associated with said base structure (2), and a contrast bar (6), associated with said lid (4), **characterized in that** said contrast bar (6) is associated with said lid (4) detachably by means of at least one quick coupling/uncoupling device (7), and **in that** said at least one quick coupling/uncoupling device (7) comprises male mating means (8) which can be engaged with female mating means (9), means (10) for retaining said male mating means (8) engaged with said female mating means (9), and actuation means (11) which can be activated by the user to deactivate said retention means (10) and allow the disengagement of said male mating means (8) from said female mating means (9).

2. The machine according to claim 1, **characterized in that** said female mating means (9) comprise a seat (9a) that is formed on said contrast bar (6), said male mating means (8) comprising an engagement pin (8a), which is connected to said lid (4) and can engage detachably said seat (9a).

3. The machine according to claim 2, **characterized in that** said retention means (10) comprise, at said seat (9a), a retention element (14), which is pushed by elastic means (15) in order to retain said engagement pin (8a) in said seat (9a) and can move in contrast with said elastic means (15) in order to allow the insertion of said engagement pin (8a) in said seat (9a), said actuation means comprising a button (16) which is adapted to actuate the movement of said retention element (14) in disengagement from said engagement pin (8a) in order to allow the disengagement of said engagement pin (8a) from said seat (9a).

4. The machine according to claim 3 , **characterized in that** said engagement pin (8a) has, on its lateral surface, a groove (17) which can be engaged by said retention element (14).

5. The machine according to claim 3 , **characterized in that** said retention element (14) comprises a lever body (18) which can rotate with respect to said contrast bar (6), said button (16) comprising an end (18a) for the actuation of said lever body (18).

6. The machine according to claim 5 , **characterized in that** said lever body (18) has a through opening (20) and can be moved between a locking position, in which it affects, with at least one of its portions, said seat (9a), and a release position, in which said through opening (20) is substantially aligned with said seat (9a).

7. The machine according to claim 3 , **characterized in that** said retention element (14) comprises a plate-like body (50) which is fitted so that it can translate, with respect to said contrast bar (6), along a movement direction (100) which is substantially perpendicular to the axis of said engagement pin (8a).

8. The machine according to claim 7 , **characterized in that** a through slot (51) is formed in said plate-like body (50), is extended substantially parallel to said movement direction (100) and has at least two communicating portions, respectively an engagement portion (58a) and an insertion portion (58b), which are arranged in succession along the longitudinal extension of said through slot (51), said insertion portion (58b) having, transversely to the longitudinal extension of said through slot (51), a larger space occupation than said engagement portion (58a), said engagement portion (58a) and said insertion portion (58b) being selectively arrangeable at said seat (9a) by means of a translation of said plate-like body (50) along said movement direction (100), said engagement pin (8a) being adapted to pass through said insertion portion (58b) but not through said engagement portion (58a) of said through slot (51), said engagement pin (8a) being engageable with said engagement portion (58a) of said through slot (51) following the crossing of said insertion portion (58b), arranged at said seat (9a), by said engagement pin (8a) and following the insertion of said engagement pin in said seat (9a), with subsequent translation of said plate-like body (50) along said movement direction (100), in order to bring said engagement portion (58a) at said seat (9a) and in engagement with the portion of said engagement pin (8a) that is affected by said groove (17).

9. The machine according to claim 2 , **characterized in that** said engagement pin (8a) is connected to said lid (4) by virtue of the interposition of means for adjusting its axial position.

10. The machine according to claim 1, **characterized in that** it comprises a pair of quick coupling/uncoupling devices (7) which are arranged at the ends of said contrast bar (6).

## Patentansprüche

1. Eine Maschine (1) zur Verpackung von Lebensmittelprodukten in Vakuumbeuteln, die eine Grundstruktur (2) mit einer darin geformten Vakuumkammer (3) umfasst, welche durch einen Deckel (4) verschlossen werden kann und dazu dient, einen Beutel zur Vakuumverpackung der Lebensmittelprodukte aufzunehmen, wobei Mittel zur Versiegelung des Beutels bereitgestellt sind, die eine mit der Grundstruktur (2) verbundene Heißsiegelleiste (5) und eine Gegenleiste (6) umfassen, die mit dem Deckel (4) verbunden ist, **dadurch gekennzeichnet, dass** die Gegenleiste (6) lösbar über mindestens eine Schnellkopplungs-/-Entkopplungsvorrichtung (7) mit dem Deckel (4) verbunden ist und dadurch, dass die mindestens eine Schnellkopplungs-/-Entkopplungsvorrichtung (7) vorstehende Passglieder (8) umfasst, die in aufnehmende Passglieder (9) eingreifen können, Mittel (10) um die vorstehenden Passmittel (8) mit den aufnehmenden Passmitteln (9) in Eingriff zu halten und Betätigungsmittel (11), die vom Benutzer aktiviert werden können, um die Haltemittel (10) zu deaktivieren und die Trennung der vorstehenden Passmittel (8) von den aufnehmenden Passmitteln (9) zu ermöglichen.

2. Die Maschine gemäß Anspruch 1, **dadurch gekennzeichnet, dass** die aufnehmenden Passmittel (9) einen Sitz (9a) umfassen, der an der Gegenleiste (6) geformt ist, wobei die vorstehenden Passmittel (8) einen Eingriffsstift (8a) umfassen, der mit dem Deckel (4) verbunden ist und lösbar in den Sitz (9a) eingreifen kann.

3. Die Maschine gemäß Anspruch 2, **dadurch gekennzeichnet, dass** die Haltemittel (10) an dem Sitz (9a) ein Halteelement (14) umfassen, das von elastischen Mitteln (15) gedrückt wird, um den Eingriffsstift (8a) in Sitz (9a) zu halten und sich im Kontrast zu den elastischen Mitteln (15) bewegen kann, um das Einführen des Eingriffsstift (8a) in den Sitz (9a) zu ermöglichen, wobei die Betätigungsmittel einen Knopf (16) umfassen, der ausgebildet ist, um die Bewegung des Halteelements (14) in den gelösten Zustand von dem Eingriffsstift (8a) auszulösen, um die Trennung des Eingriffsstifts (8a) von dem Sitz (9a) zu ermöglichen.

4. Die Maschine gemäß Anspruch 3, **dadurch gekennzeichnet, dass** der Eingriffsstift (8a) an seiner seitlichen Oberfläche eine Nut (17) hat, die mit dem Halteelement (14) in Eingriff stehen kann.

5. Die Maschine gemäß Anspruch 3, **dadurch gekennzeichnet, dass** das Halteelement (14) einen Hebelkörper (18) umfasst, der sich im Verhältnis zu der Gegenleiste (6) drehen kann, wobei der Knopf (16) ein Ende (18a) zur Betätigung des Hebelkörpers (18) umfasst.

6. Die Maschine gemäß Anspruch 5, **dadurch gekennzeichnet, dass** der Hebelkörper (18) eine Durchgangsöffnung (20) hat und zwischen einer Blockierposition, in welcher er mit mindestens einem seiner Teile den Sitz (9a) beeinflusst und einer Lösungsposition bewegt werden kann, in welcher die Durchgangsöffnung (20) im Wesentlichen mit dem Sitz (9a) ausgerichtet ist.

7. Die Maschine gemäß Anspruch 3, **dadurch gekennzeichnet, dass** das Halteelement (14) einen plattenartigen Körper (50) umfasst, der so montiert ist, dass er sich mit Bezug auf die Gegenleiste (6) in einer Bewegungsrichtung (100) bewegen kann, die im Wesentlichen senkrecht zur Achse des Eingriffsstifts (8a) ist.

8. Die Maschine gemäß Anspruch 7, **dadurch gekennzeichnet, dass** ein Durchgangsschlitz (51) in dem plattenartigen Körper (50) geformt ist, sich im Wesentlichen parallel zu der Bewegungsrichtung (100) erstreckt und mindestens zwei kommunizierende Abschnitte hat, einen Eingriffsabschnitt (58a) und einen Einführabschnitt (58b), die hintereinander entlang der Längserstreckung des Durchgangsschlitzes (51) angeordnet sind, wobei der Einführabschnitt (58b) quer zu der Längserstreckung des Durchgangsschlitzes (51) einen größeren Platzbedarf hat, als der Eingriffsabschnitt (58a), wobei der Eingriffsabschnitt (58a) und der Einführabschnitt (58b) durch eine Translationsbewegung des plattenartigen Körpers (50) in der Bewegungsrichtung (100) wahlweise an dem Sitz (9a) angeordnet werden können, wobei der Eingriffsstift (8a) ausgebildet ist, um den Einführabschnitt (58b), aber nicht den Eingriffsabschnitt (58a) des Durchgangsschlitzes (51) zu durchdringen, wobei der Eingriffsstift (8a) nach dem Durchqueren des Einführabschnitts (58b), angeordnet an dem Sitz (9a), durch den Eingriffsstift (8a) und nach dem Einführen des Eingriffsstifts in den Sitz (9a) mit dem Eingriffsabschnitt (58a) des Durchgangsschlitzes (51) in Eingriff gebracht werden kann mit daraus folgender Translationsbewegung des plattenartigen Körpers (50) in der Bewegungsrichtung (100), um den Eingriffsabschnitt (58a) an dem Sitz (9a) und in Eingriff mit dem Abschnitt des Eingriffsstifts (8a) zu bringen, der von der Nut (17) beeinflusst wird.

9. Die Maschine gemäß Anspruch 2, **dadurch gekennzeichnet, dass** der Eingriffsstift (8a) mit dem Deckel (4) durch Anordnung von Mitteln zur Anpassung seiner axialen Position verbunden ist.

10. Die Maschine gemäß Anspruch 1, **dadurch gekennzeichnet, dass** sie ein Paar von Schnellkopplungs-/-Entkopplungsvorrichtung (7) umfasst, die an den Enden der Gegenleiste (6) angeordnet sind.

## Revendications

1. Machine (1) destinée à emballer des produits alimentaires dans des sacs sous vide, comportant une structure de base (2) avec une chambre à vide (3) formée dans celle-ci qui peut être fermée au moyen d'un couvercle (4) et est conçue pour recevoir un sac pour l'emballage sous vide de produits alimentaires, des moyens étant prévus pour sceller ledit sac qui comportent une barre de thermoscellage (5), associée à ladite structure de base (2), et une barre en opposition (6), associée audit couvercle (4), **caractérisée en ce que** ladite barre en opposition (6) est associée audit couvercle (4) de manière détachable au moyen d'au moins un dispositif de couplage/découplage rapide (7), et **en ce que** ledit au moins un dispositif de couplage/découplage rapide (7) comporte des moyens d'appariement mâle (9) dans lesquels peuvent s'engager des moyens d'appariement femelle (9), des moyens (10) pour retenir lesdits moyens d'appariement mâle (8) engagés dans lesdits moyens d'appariement femelle (9), et des moyens d'actionnement (11) qui peuvent être activés par l'utilisateur pour désactiver lesdits moyens de retenue (10) et permettre le désengagement desdits moyens d'appariement mâle (8) desdits moyens d'appariement femelle (9).

2. Machine selon la revendication 1, **caractérisée en ce que** lesdits moyens d'appariement femelle (9) comportent un logement (9a) qui est formé sur ladite barre en opposition (6), lesdits moyens d'appariement mâle (8) comportant un ergot d'engagement (8a), qui est relié audit couvercle (4) et peut s'engager dans ledit logement (9a) de manière détachable.

3. Machine selon la revendication 2, **caractérisée en ce que** lesdits moyens de retenue (10) comportent, sur ledit logement (9a), un élément de retenue (14), qui est poussé par des moyens élastiques (15) afin de retenir ledit ergot d'engagement (8a) dans ledit logement (9a) et peut se déplacer en opposition auxdits moyens élastiques (15) afin de permettre l'insertion dudit ergot d'engagement (8a) dans ledit logement (9a), lesdits moyens d'actionnement comportant un bouton (16) qui est adapté pour actionner le mouvement dudit élément de retenue (14) en désengagement dudit ergot d'engagement (8a) afin de permettre le désengagement dudit ergot d'engagement (8a) dudit logement (9a).

4. Machine selon la revendication 3, **caractérisée en ce que** ledit ergot d'engagement (8a) a, sur sa surface latérale, une rainure (17) dans laquelle peut s'engager ledit élément de retenue (14).

5. Machine selon la revendication 3, **caractérisée en ce que** ledit élément de retenue (14) comporte un corps de levier (18) qui peut tourner par rapport à ladite barre en opposition (6), ledit bouton (16) comportant une extrémité (18a) pour l'actionnement dudit corps de levier (18).

6. Machine selon la revendication 5, **caractérisée en ce que** ledit corps de levier (18) a une ouverture traversante (20) et peut être déplacé entre une position de blocage, dans laquelle il affecte, avec au moins une de ses parties, ledit logement (9a), et une position de libération, dans laquelle ladite ouverture traversante (20) est sensiblement alignée avec ledit logement (9a).

7. Machine selon la revendication 3, **caractérisée en ce que** ledit élément de retenue (14) comporte un corps analogue à une plaque (50) qui est monté de sorte qu'il peut se déplacer en translation, par rapport à ladite barre en opposition (6), le long d'une direction de mouvement (100) qui est sensiblement perpendiculaire à l'axe dudit ergot d'engagement (8a).

8. Machine selon la revendication 7, **caractérisée en ce qu'**une fente traversante (51) est formée dans ledit corps analogue à une plaque (50), s'étend de manière sensiblement parallèle à ladite direction de mouvement (100) et a au moins deux parties en communication, respectivement une partie d'engagement (58a) et une partie d'insertion (58b), qui sont agencées successivement le long de l'extension longitudinale de ladite fente traversante (51), ladite partie d'insertion (58b) ayant, transversalement à l'extension longitudinale de ladite fente traversante (51), une occupation d'espace plus grande que ladite partie d'engagement (58a), ladite partie d'engagement (58a) et ladite partie d'insertion (58b) pouvant être sélectivement agencées sur ledit logement (9a) au moyen d'une translation dudit corps analogue à une plaque (50) le long de ladite direction de mouvement (100), ledit ergot d'engagement (8a) étant adapté pour passer à travers ladite partie d'insertion (58b) mais pas à travers ladite partie d'engagement (58a) de ladite fente traversante (51), ledit ergot d'engagement (8a) pouvant s'engager dans ladite partie d'engagement (58a) de ladite fente traversante (51) après le croisement de ladite partie d'insertion (58b), agencée sur ledit logement (9a), par ledit ergot d'engagement (8a) et après l'insertion dudit ergot d'engagement dans ledit logement (9a), avec une translation ultérieure dudit corps analogue à une plaque (50) le long de ladite direction de mouvement (100), afin d'amener ladite partie d'engagement (58a) sur ledit logement (9a) et en engagement dans la partie dudit ergot d'engagement (8a) qui est affectée par ladite rainure (17).

9. Machine selon la revendication 2, **caractérisée en ce que** ledit ergot d'engagement (8a) est relié audit couvercle (4) du fait de l'interposition de moyens pour régler sa position axiale.

10. Machine selon la revendication 1, **caractérisée en ce qu'**elle comporte une paire de dispositifs de couplage/découplage rapide (7) qui sont agencés aux extrémités de ladite barre en opposition (6).
